# EUROPEAN PATENT APPLICATION

(11) **EP 2 433 780 A1**
(43) Date of publication of application: **28.03.2012**
(21) Application number: 10400048.4
(22) Date of filing: 28.09.2010
(51) Int. Cl.: B29C 70/08, B29C 70/38, B29C 70/44, B32B 3/14, B32B 37/04

(54) **Improved automated manufacturing process for high performance composite material part**

(71) Applicant: Eurocopter Deutschland GmbH, 86609 Donauwörth (DE)
(72) Inventor: Weimer, Christian, 81543 München (DE); Bätge, Nikolaus, 82041 Deisenhofen (DE); Parlevliet, Patricia, 81667 München (DE)
(74) Representative: Pouillot, Laurent Pierre Paul

(57) **Abstract**

The present invention relates to an automated process of first ply deposition of dry fibres in the frame of a filament winding, tape laying or fibre/tow placement kind technology for manufacturing a composite part having a reinforcement structure comprising reinforcement layers based on fibre, fabric or textile reinforcement and an impregnation matrix impregnating the reinforcement structure, consisting of making deposits of the reinforcement layers on a mould surface, characterized in that it consists of using an mould surface whose shape corresponds at least partly to the future composite part, placing a functional thermoplastic sheet 3 over at least a part of the mould surface, arranging a first layer of dry reinforcing fibres on the functional thermoplastic sheet 3, and heating the first layer until reaching at least a partly melting of the impregnation matrix and at least a partly melting of the functional thermoplastic sheet 3, in order to obtain a bonding between the first layer and the thermoplastic sheet 3.

## Description

The present invention relates to the general technical field of manufacturing integral parts comprising for example fibre- and resin-based composites.

The invention relates more precisely to various automated manufacturing processes which include a step of first ply deposition of for example dry fibres. Dry fibre placement according to the invention enables local reinforcements and the manufacturing of customised blanks. In the frame of the invention, dry fibre tows, tapes or commingled yarns consisting of reinforcing fibres such as carbon or glass, are preferably held together by a binder, veil or any resin type material.

For example these parts are obtained by moulding a composite material comprising reinforcement fibres, fabrics or textiles and an impregnation matrix. These parts are for example meant for the aeronautics industry, aerospace industry, automotive industry or the wind-energy industry.

Impregnation matrix or system is understood to be any type of thermoformable resin or mixture of resins or thermoplastic materials suitable for impregnating by injection or infusion of the reinforcement structure and whose solidification results from polymerization.

The term "fibres" indicates hereinafter all types of structural fibres such as carbon fibres, glass fibres or aramid fibres, polyethylene, basalt or natural fibres.

The term "tape" indicates aligned reinforcing fibres impregnated with a polymer resin.

The known moulding processes are not described in detail herein.

A polymer structure reinforced with fibres can be manufactured according to various and known processes.

The invention concerns more particularly automated manufacturing processes in which fibre tapes or tows are applied on a mould surface or on a tool. Such manufacturing processes are shortly described in the following.

One of these processes is called "automated fibre placement" or AFP, and another of these processes is called "automated tape laying" or ATP. The tape must be understood as aligned reinforcing fibres impregnated with a matrix, for example of the polymer resin kind.

In an automated fibre placement process or in a process of filament winding, material is applied via a robotically controlled head, which weight depends on the application. The head contains many of the mechanics needed for the material placement.

For the automated fibre placement, multiple tows are supplied from creels located on or near the head. The number of tows used by a head depends on the width requirements of the part and can range from as few as one or two to simultaneous placement of as many as 32.

For the automated tape laying, the head includes a spool or spools of tape, a winder, winder guides, a compaction shoe, a position sensor and a tape cutter or slitter.

In either case, the head may be located on the end of a multi-axis articulating robot that moves around a tool or mandrel to which material is being applied, or the head may be located an a gantry suspended above the tool.

Alternatively, the tool or mandrel can be moved or rotated to provide the head access to different sections of the tool.

Fibre tapes or tows are applied to a tool in courses, which consist of one row of material of any length at any angle. Multiple courses are usually applied together over an area or pattern and are defined and controlled by machine control software programmed with numerical input derived from part design and analysis.

In a filament winding process, the reinforcing fibre tow is dry or already impregnated and the mould and the final product rotate. The fibre feed can move only along a limited number of axes.

In a tow placement process, which is similar to filament winding, the fibre placement head is moving around the mould and product, which may also be able to turn.

Advanced fibre placement, tape laying, filament winding and tow placement, are methods whereby the fibres are positioned exactly where they are needed in the structure, to build up loading paths that are necessary for the load carrying capabilities of the composite structure.

The first layer of the material is usually very difficult to apply to a tooling surface, since the use of glue is often not allowed in aerospace structures. The use of glue or of an adhesive material can compromise the structure properties. It is also time consuming and labour intensive to bond every beginning of every fibre tow or tape to the tool surface. This complies not with a rapid automated manufacturing process.

In the known processes, steps are often necessary, such as using a gel coat for surface finishing, or surface cleaning and surface preparation for bonding operations.

The problem for the placement of dry fibres is the adhesion to a mould or tool surface. For example, a deposition of carbon fibres, for instance unidirectional small strips of carbon fibres, the fibres usually don't stick to the mould or to the tool surface.

A dry tow is also difficult to handle due to its low stiffness.

Consequently the objective of the present invention is to remedy the aforementioned disadvantages and propose new automated processes including a step of first ply deposition of dry fibres for manufacturing reinforced and optimized composite parts especially as it relates to properties thereof.

Another objective of the present invention is to propose a new automated manufacturing process which does not require implementing finishing operations following the final solidification step of the reinforced composite part in order to provide this part with the required functionalities and properties.

Another objective of the present invention is to propose a new particularly simple and reliable automated manufacturing process for a reinforced and optimized composite part with a limited number of steps to be implemented.

Another objective of the present invention is to propose a new particularly simple and reliable automated manufacturing process for a reinforced and optimized composite part with a limited number of elements necessary for its implementation and also a limited number of elements to be disposed or recycled.

The objectives of the invention are achieved using an automated process of first ply deposition of for example dry fibres in the frame of a filament winding, tape laying or fibre/tow placement kind technology for manufacturing a composite part having a reinforcement structure comprising reinforcement layers based on fibre, fabric or textile reinforcement and an impregnation matrix impregnating the reinforcement structure, consisting of making deposits of the reinforcement layers on a mould surface, characterized in that it consists of:
- using an mould surface whose shape corresponds at least partly to the future composite part,
- placing a functional thermoplastic sheet over at least a part of the mould surface,
- arranging a first layer of for example dry reinforcing fibres on the functional thermoplastic sheet,
- and heating the first layer until reaching at least a partly melting of the impregnation matrix and at least a partly melting of the functional thermoplastic sheet, in order to obtain a bonding between the first layer and the thermoplastic sheet.

According to an implementation example, the process conforming to the invention consists in:
- arranging at least one additional reinforcement layer on the first reinforcement layer and impregnating for instance by infusion the reinforcing layers,
- next, solidifying the resulting composite part by subjecting it to the final solidification temperature for a set time,
- and, separating the composite part from the mould surface.

According to an implementation example, the process conforming to the invention consists in using a positive tool defining the mould surface.

According to an implementation example, the process conforming to the invention consists of thermoforming the functional thermoplastic sheet over the tool. The process consists of shaping the functional thermoplastic sheet that shapes the future composite part. Thus any risk of appearance of folds or irregularities in the outer surface of the composite part is avoided.

According to an implementation example, the process conforming to the invention consists of using a functional thermoplastic sheet whose softening temperature lies in the range of -50°C and 250°C, preferably in the range 80°C-250°C and most preferably in the range 120°C-250°C.

According to an implementation example, the process conforming to the invention consists in consists of using a functional thermoplastic sheet, some constituent materials of which are chosen among materials such as PSU, PPSU, PES, SRP, polyimides, polyamides, poly(ether imide) PEI, phenoxy and copolymers or materials likely to dissolve in epoxy resins, caprolactam, polysulfones, polyether sulphides or polyetherimides.

Thermoplastic materials have the advantage, opposed to thermoset materials, that they can be remolten and reshaped without end and that they provide much higher toughness.

According to an implementation example, the process conforming to the invention consists of using a functional thermoplastic sheet having a thickness included between 0,02 mm and 1 mm, and preferably between 0.02 mm and 0.4 mm and most preferably between 0.02 mm and 0.05 mm.

According to an implementation example, the process conforming to the invention consists of using materials making up the functional thermoplastic sheet which comprise at least one material which expands under the effect of heat. Such an expansion makes it possible to improve the joining between the parts of the reinforcement structure and to improve the finishing layer. Self-healing properties of the finishing layer can so be obtained.

According to an implementation example, the process conforming to the invention consists of using materials making up the functional thermoplastic sheet which comprise at least one electrically conductive material. For this purpose the thermoplastic sheet can comprise carbon nanotube type particles or other metallic additives. As a variant, the thermoplastic sheet can also be associated with a metallic mesh type structure. This is particularly interesting for achieving protection against lightning strike and securing the electrical bonding.

According to an implementation example, the process conforming to the invention consists of using materials making up the functional thermoplastic sheet which comprise at least one non-flammable or flame retardant material. Such material makes it possible to improve the flame retardancy of the composite part.

The functional thermoplastic sheet can be, in its constitutive materials, similar to the impregnation matrix or system of the reinforcement structure or tape, but can also be of any other material suitable for thermal bonding.

According to an implementation example, the process conforming to the invention consists of using an impregnation matrix for the reinforcement structure whose solidification temperature is included between 120°C and 400°C and preferably between 120°C and 330°C.

According to an implementation example of the process conforming to the invention, the impregnation matrix is a resin chosen among a family of products comprising epoxies, cyanate esters or polyimides.

According to an implementation example of the process conforming to the invention, the impregnation matrix is a thermoplastic resin system chosen from the family of products comprising polyamides (anionic polyamide-6, PA11), polyesters (cyclic PBT), liquid crystal polymers, polyketones or polysulfones.

According to an implementation example, the process conforming to the invention consists of subjecting the impregnated reinforcement structure to a vacuum or to a pressure greater than atmospheric pressure during the final solidification stage.

According to an implementation example, the process conforming to the invention consists of machining away the functional thermoplastic sheet from the composite part.

According to an implementation example, the process conforming to the invention consists of using the functional thermoplastic sheet on the composite part as a surface coating or a surface for thermal bonding.

According to an implementation example, the manufacturing process conforming to the invention is an automated tape laying process.

According to an implementation example, the manufacturing process conforming to the invention is an automated fibre placement process.

According to an implementation example, the manufacturing process conforming to the invention is a filament winding process.

The objectives of the invention are also achieved with a composite reinforced part obtained with the above mentioned manufacturing process.

An advantage of the process conforming to the invention, resides in providing new properties and/or functionalities for the surface of the composite part and to do so via the materials making up the thermoplastic sheet. By way of examples, high hardness, toughness, scratch resistance, erosion protection, wear resistance, lightning strike protection, coatings, good adhesion with underlying matrix and dirt repelling properties can be obtained. The thermoplastic sheet according to the invention encompasses also thermoplastic materials with additives such as nano-particles, flame retardants or pigments.

Another advantage of the manufacturing process conforming to the invention lies in the simplicity thereof and in the limited number of steps for implementation thereof.

Another advantage of the manufacturing process conforming to the invention lies in providing the surface of the composite part with new properties and/or functionalities and doing so without implementing additional manufacturing steps or at least with less complicated steps than the steps of the known methods.

Another advantage of the manufacturing process conforming to the invention is obtained unexpectedly by the contribution of new properties and/or functionalities to the surface of the composite part, without substantially modifying the implementation of known manufacturing processes. In particular, the solidification cycle of the impregnated structure is not altered by the use of the functional thermoplastic sheet.

Another advantage of the manufacturing process conforming to the invention, resides in obtaining a composite part retaining a satisfactory finish on the surface, thereby avoiding having to lay out additional coatings on said part.

Another advantage of the manufacturing process conforming to the invention resides in obtaining a composite part having a finish surface on which a layer of varnish or paint can be directly deposited without prior treatment of said finish surface.

Another advantage of the manufacturing process conforming to the invention resides in obtaining a composite part having a finishing surface giving the composite part an improved impact resistance.

Another advantage of the manufacturing process conforming to the invention resides in obtaining an easy de-moulding of the composite part. The functional thermoplastic sheet can also be easily machined away if necessary or alternatively can build a layer suitable for thermal bonding.

Another advantage of the manufacturing process conforming to the invention resides in that the use of glue or any self-adhesive material is prevented.

Another advantage of the manufacturing process conforming to the invention resides in that the recommended cure cycle of the injected/infused resin is not altered by the use of a thermoplastic sheet/film according to the invention.

The invention and its advantages will appear with greater detail in conjunction with the description which follows with execution and implementation examples, given as illustration and without limitation, with reference to the attached figures which shows:
- figure 1, illustrates a positive tool in an example of implementation of the manufacturing process conforming to the invention, for making composite material parts,
- figure 2 illustrates the shaping of the functional thermoplastic sheet over the positive tool in an example of implementation of the manufacturing process conforming to the invention, for making composite material parts,
- and figure 3 illustrates steps of arranging impregnated reinforcement layers on the functional thermoplastic sheet in an example of implementation of the manufacturing process conforming to the invention, for making composite material parts.

The identical structural and functional elements, which are shown in several different figures or illustrations, are given one single numeric or alphanumeric reference.

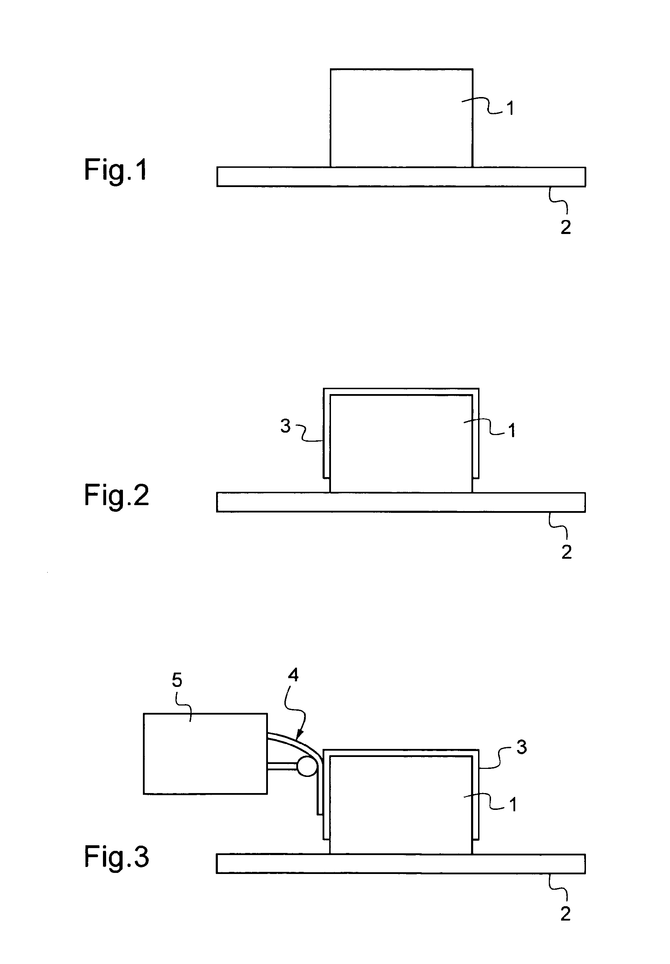

In Figure 1, a positive tool 1 is placed on a support 2. This support 2 can be movable from one operating place to another during the manufacturing process of a composite part.

Figure 2, illustrates the shaping of a functional thermoplastic sheet 3 over the positive tool 1.

Figure 3, illustrates steps of arranging an impregnated reinforcement first layer 4 of fibres on the functional thermoplastic sheet 3. A movable robot head 5 undertakes the deposit of the fibres on the functional thermoplastic sheet 3 in one or more automated courses.

According to an implementation example, the manufacturing process conforming to the invention is an automated tape laying process.

According to another implementation example, the manufacturing process conforming to the invention is an automated fibre placement process.

According to another implementation example, the manufacturing process conforming to the invention is a filament winding process.

The reinforcement structure is a multiple ply deposition which comprises for example rows of filaments, tows or tapes of fibres in each of its layers.

The functional thermoplastic sheet 3 has a softening temperature lies in the range of -50°C and 250°C, preferably in the range 80°C-250°C and most preferably in the range 120°C-250°C.

The functional thermoplastic sheet 3 has a thickness included between 0,02 mm and 1 mm, and preferably between 0.02 mm and 0.4 mm and most preferably between 0.02 mm and 0.05 mm.

The constituent materials of the functional thermoplastic sheet 3 or film, are chosen among materials such as PSU, PPSU, PES, SRP, polyimides, polyamides, poly(ether imide) PEI, phenoxy and copolymers or materials likely to dissolve in epoxy resins, caprolactam, polysulfones, polyether sulphides, polyetherimides or in other infusion matrices.

Thermoplastics have the advantage, opposed to thermosets, that they can be remolten and reshaped and that they provide higher toughness. For example, less scrap because the part can be reworked and surface improvement may be obtained.

The process according to the invention consists of using an impregnation matrix for the reinforcement structure whose solidification temperature is included between 120°C and 400°C and preferably between 120°C and 330°C.

Alternatively, the impregnation matrix is a thermoset resin system chosen from the family of products comprising epoxies (RTM6), polyimides (BMI) and cyanate-esters or a thermoplastic resin system chosen from the family of products comprising polyamides (anionic polyamide-6, PA11), polyesters (cyclics PBT), liquid crystalline polymers, polyketones and polysulfones.

According to the invention, the manufacturing process for a composite part having a reinforcement structure comprising reinforcement layers based on fibre, fabric or textile reinforcement structure and an impregnation matrix impregnating the reinforcement structure, consists of making automated deposits of the reinforcement layers on a mould surface.

According to a step a1, the process consists in using a mould surface or tooling surface, for example the tool 1, whose shape corresponds to the future composite part.

According to a step a2, the process consists in placing the functional thermoplastic sheet 3 over the mould surface.

According to a step a3, the process consists in arranging the first layer 4 of the reinforcement structure on the functional thermoplastic sheet 3 with the help of the robot head 5. This first layer 4 is based on fibres in the form of tows or tapes. The tows can be dry or impregnated with the matrix, for example a polymer resin.

According to a step a4, the process consists in heating the first layer 4 until reaching at least a partly melting of its impregnation matrix and reaching at least a partly melting of the functional thermoplastic sheet 3, in order to obtain a bonding between the first layer 4 and the functional thermoplastic sheet 3. The robot head 5 comprise advantageously corresponding heating means such as a laser source.

According to a step a5, the process consists in arranging at least one additional reinforcement layer on the first reinforcement layer. The applying of the additional layer or layers is simultaneous to a heating of reinforcement layers, in order to bond the layers together.

The manufacturing process consists of heating and locally melting the functional thermoplastic sheet 3, after arrangement on the tool 1, so as to obtain a bond with the first layer 4 of the reinforcement structure. The reinforcement structure can be made up of an assembly of reinforcement layers which are kept in position by the bond between the functional thermoplastic sheet 3 and the first layer 4 and by the bond between the different reinforcement layers.

According to a step a6, the process consists in next solidifying the resulting composite part by subjecting it to the final solidification temperature for a set time.

And according to a step a7, the process consists in separating the composite part from the mould surface.

The process can consist of thermoforming the functional thermoplastic sheet 3 over the tool 1. This operation can be undertaken by the robot head 5 which can deliver the functional thermoplastic sheet 3 under optimal temperature and pressure conditions.

The process can consist of subjecting the impregnated reinforcement structure to a vacuum or to a pressure greater than atmospheric pressure during the final solidification stage.

The process can consist of machining away the functional thermoplastic sheet 3 from the composite part after the final solidification stage.

Alternatively, the process can consist of using the functional thermoplastic sheet 3 on the composite part as a surface coating, a finishing layer or a surface for thermal bonding.

An exemplary carrying out of the invention can consist for instance in placing the thermoplastic sheet 3 on a mould surface, for example by means of thermoforming (using heat and pressure) and use it to enhance the first ply deposit for fibre placement with impregnated tapes or tows with a polymer, in any form, attached to it.

With the heat coming from the fibre placement heat source, such as a laser or hot gas, to melt the polymer on the fibres, the underlying thermoplastic film also melts a little and thermal bonding between the two occurs, facilitating first ply deposit. This prevents the need for a self-adhesive material.

Concerning the heating, we have several possibilities. The first reinforcement layer can be heated, or the thermoplastic sheet 3 can be heated or both can be heated, to form a diffusion bond or an adhesive bond. At least one of the two is heated to obtain partial melting and that a bond can be made which is strong enough to enable fibre placement.

The thermoplastic layer or sheet 3 can also consist of a reinforced layer with carbon or glass fibres, fully impregnated, to prevent residual stresses from occurring because the thermal expansion coefficient is similar to the one of the material deposed on the top of it. This reinforcement structure can consist of fully impregnated layers with a thermoset matrix (such as a prepreg) or with a thermoplastic matrix or can consist of partially impregnated fibres which will be infused/impregnated later. In any way the matrix is already placed on the fibres and bonds with the thermoplastic sheet 3 by heating.

In another exemplary carrying out of the invention, for instance in the frame of an advanced fibre placement process either by tape laying, filament winding or tow placement, whereby the fibres are positioned exactly where they are needed in a structure, the thermoplastic layer or sheet 3 can be added to the product in the shape of a film applied on the top of a layer stack that will be later on consolidated into a composite product.

This film can then be used as a vacuum bag that is necessary to manufacture the composite part with autoclave or liquid composite moulding (LCM). This thermoplastic layer can after curing fulfil the requirements mentioned earlier, but also prevents the necessity of using a vacuum bag material that would normally be disposed of later when it is damaged. Preferably, the thermoplastic layer already has the net-shape of the final composite product such that no folds arise that could harm the surface properties of the composite product.

Unsurprisingly, the present invention is subject to several variations in terms of its implementation. Although several execution and implementation modes have been described, it is clear that identifying all possible modes exhaustively is inconceivable. It is, of course, possible to replace any feature or step described above with an equivalent feature or step and still remain within the scope of the present invention.

## Claims

1. Automated process of first ply deposition of for example dry fibres in the frame of a filament winding, tape laying or fibre/tow placement kind technology for manufacturing a composite part having a reinforcement structure comprising reinforcement layers based on fibre, fabric or textile reinforcement and an impregnation matrix impregnating the reinforcement structure, consisting of making deposits of the reinforcement layers on a mould surface,
**characterized in that** it consists of:
- (a1) using a mould surface whose shape corresponds at least partly to the future composite part,
- (a2) placing a functional thermoplastic sheet (3) over at least a part of the mould surface,
- (a3) arranging a first layer (4) of for example dry reinforcing fibres on the functional thermoplastic sheet (3),
- and (a4) heating the first layer (4) until reaching at least a partly melting of the impregnation matrix and at least a partly melting of the functional thermoplastic sheet (3), in order to obtain a bonding between the first layer (4) and the thermoplastic sheet (3).

2. Process according to claim 1,
**characterized in that** it consists in:
- (a5) arranging at least one additional reinforcement layer on the first reinforcement layer (4) and impregnating for instance by an infusion step, the reinforcing layers,
- (a6) next solidifying the resulting composite part by subjecting it to the final solidification temperature for a set time,
- and (a7) separating the composite part from the mould surface.

3. Process according to claim 1 or 2,
**characterized in that** it consists in using a positive tool (1) defining the mould surface.

4. Process according to claim 3,
**characterized in that** it consists of thermoforming the functional thermoplastic sheet (3) over the tool (1).

5. Process according to any one of claims 1 to 4,
**characterized in that** it consists of using a functional thermoplastic sheet (3) whose softening temperature lies in the range of -50°C and 250°C, preferably in the range 80°C-250°C and most preferably in the range 120°C - 250°C.

6. Process according to any one of claims 1 to 5,
**characterized in that** it consists of using a functional thermoplastic sheet (3), some constituent materials of which are chosen among materials such as PSU, PPSU, PES, SRP, polyimides, polyamides, poly(ether imide) PEI, phenoxy and copolymers or materials likely to partially dissolve in or chemically bond to epoxy resins, caprolactam, polysulfones, polyimides, or any other resins suitable for injection.

7. Process according to any one of claims 1 to 6,
**characterized in that** it consists of using a functional thermoplastic sheet (3) having a thickness included between 0,02 mm and 1 mm, and preferably between 0.02 mm and 0.4 mm and most preferably between 0.02 mm and 0.05 mm.

8. Process according to any one of claims 1 to 7,
**characterized in that** it consists of using materials making up the functional thermoplastic sheet (3) which comprise at least one material which expands under the effect of heat.

9. Process according to any one of claims 1 to 7,
**characterized in that** it consists of using materials making up the functional thermoplastic sheet (3) which comprise at least one electrically conductive material.

10. Process according to any one of claims 1 to 7,
**characterized in that** it consists of using materials making up the functional thermoplastic sheet (3) which comprise at least one non-flammable or flame retardant material.

11. Process according to any one of claims 1 to 10,
**characterized in that** it consists of using materials making up the functional thermoplastic sheet (3) which comprise a reinforced layer with carbon or glass fibres, fully impregnated with a thermoplastic resin system.

12. Process according to any one of claims 1 to 11,
**characterized in that** it consists of using an impregnation matrix for the reinforcement structure whose solidification temperature is included between 120°C and 400°C, preferably between 120°C and 330°C and most preferably between 120°C and 200°C.

13. Process according to any one of claims 1 to 12,
**characterized in that** the impregnation matrix is a thermoset resin system chosen among a family of products comprising epoxies (RTM6), polyimides (BMI) and cyanate esters.

14. Process according to any one of claims 1 to 12,
**characterized in that** the impregnation matrix is a thermoplastic resin system chosen from the family of products comprising polyamides (anionic polyamide-6, PA11), polyesters (cyclics PBT), liquid crystalline polymers, polyketones and polysulfones.

15. Process according to any one of claims 1 to 14,
**characterized in that** it consists of subjecting the impregnated reinforcement structure to a vacuum or to a pressure greater than atmospheric pressure during the final solidification stage.

16. Process according to any one of claims 1 to 15,
**characterized in that** it consists of machining away the functional thermoplastic sheet (3) from the composite part.

17. Process according to any one of claims 1 to 16,
**characterized in that** it consists of using the functional thermoplastic sheet (3) on the composite part as a surface coating or a surface for thermal diffusion bonding.

18. Process according to any one of claims 1 to 17,
**characterized in that** it consists of using the functional thermoplastic sheet (3) as a vacuum foil during the solidification stage.

19. Composite reinforced part obtained with an automated manufacturing process according to any one of claims 1 to 18.
